# EUROPÄISCHE PATENTSCHRIFT

(11) **EP 1 893 674 B1**
(45) Veröffentlichungstag und Bekanntmachung des Hinweises auf die Patenterteilung: **14.08.2013**
(21) Anmeldenummer: 06763637.3
(22) Anmeldetag: 12.06.2006
(51) Int. Cl.: C08J 9/00, C08L 61/28

(54) **THERMOFORMBARE MELAMIN/FORMALDEHYD-SCHAUMSTOFFE MIT GERINGER FORMALDEHYDEMISSION**
THERMOFORMABLE MELAMINE/FORMALDEHYDE-BASED FOAMS EXHIBITING LOW-FORMALDEHYDE EMISSION
MOUSSES THERMOFORMABLES A BASE DE MELANINE/FORMALDEHYDE A FAIBLE EMISSION DE FORMALDEHYDE

(30) Priorität: 14.06.2005 DE 102005027552
(43) Veröffentlichungstag der Anmeldung: 05.03.2008
(73) Patentinhaber: BASF SE, 67056 Ludwigshafen (DE)
(72) Erfinder: BAUMGARTL, Horst, 55122 Mainz (DE); SCHIERHOLZ, Jens-Uwe, 64625 Bentheim (DE)
(86) Internationale Anmeldenummer: PCT/EP2006/063082
(87) Internationale Veröffentlichungsnummer: WO 2006/134083

(56) Entgegenhaltungen:
- EP-A1- 0 523 485
- EP-A1- 1 328 573
- EP-A1- 1 505 105

## Beschreibung

Die Erfindung betrifft ein Verfahren zur Herstellung von Schaumstoffen auf Basis von Melamin/Formaldehyd-Harzen mit geringer Formaldehydemission sowie die Verwendung zur Herstellung von Formteilen durch Thermoformen.

Offenzellig elastische Schaumstoffe auf Basis von Melamin/Formaldehyd-Harzen sowie Verfahren zu ihrer Herstellung durch Erwärmen mit Heißluft, Wasserdampf oder Mikrowellenbestrahlung unter Aufschäumen und Vernetzen einer treibmittelhaltigen Lösung oder Dispersion eines Melamin/Formaldkehyd-Vorkondensates sind bekannt und beispielsweise in EP-A 17672 und EP-A 37470 beschrieben.

Schaumstoffe auf Basis von Formaldehydharze emittieren geringe Mengen Formaldehyd. Die Formaldehyd-Emission steigt mit zunehmender Temperatur und Feuchtigkeit an. Die WO 01/94436 beschreibt daher ein Verfahren zur Herstellung von Schaumstoffen auf Basis eines Melamin/Formaldehyd-Kondensationsproduktes mit geringer Formaldeyhd-Emission, wobei ein MF-Vorkondensat mit einem Molverhältnis Melamin zu Formaldehyd von größer als 1:2 eingesetzt wird. Um sehr niedrige Formaldehydemissionen zu erreichen, muß der Schaumstoff nach Trocknung noch 30 Minuten bei 220°C getempert werden. Nach der Temperung sind die Schaumstoffe jedoch ausgehärtet und nicht mehr thermoformbar.

Die EP-A 1 505 105 beschreibt daher ein Verfahren zur Herstellung von Formteilen aus Melamin/Formaldehyd-Schaumstoffen mit geringer Formaldehyd-Emission, bei dem der Schaumstoff nach der Herstellung und vor dem Thermoformen bei Temperaturen zwischen 100 und 160°C getempert wird.

EP 1 328 573 offenbart ein Verfahren zur Herstellung von Schaumstoffen durch Erwärmen unter Aufschäumen und Vernetzen einer Mischung aus Melamin/Formaldehyd Vorkondensat, Härter und Treibmittel. Eine niedrige Formaldehydemission wird durch Tempern erreicht.

EP-A1-0 523 485 definiert Phenol als Formaldehydfänger. EP-A1-0 523 485 offenbart primär ein Verfahren, mit dem Harze und keine Schäume hergestellt werden.

Aufgabe der Erfindung war es, ein Verfahren zur Herstellung von Melamin/Formaldehyd-Schaumstoffen zu finden, die thermoformbar sind und gleichzeitig bereits vor dem Thermoformen zu Formteilen geringe Formaldehyd-Emissionen aufweisen.

Demgemäß wurde ein Verfahren zur Herstellung von Schaumstoffen durch Erwärmen unter Aufschäumen und Vernetzen einer Mischung, enthaltend ein Melamin/Formaldehyd (MF)-Vorkondensat, einen Härter und ein Treibmittel, gefunden, wobei vor dem Erwärmen ein Formaldehydfänger zugegeben wird.

Als Formaldehydfänger eignen sich beispielsweise Harnstoff, substituierte Harnstoffe, alkyl- oder arylsubstituiertes Melamin, Urethane, Carbonsäureamide, Dicyandiamid, Guanidin, Sulfurylamid, Sulfonsäureamide, aliphatische Amine oder Glykole.

Der Formaldehydfänger wird in der Regel in Mengen von 2 bis 20 %, bevorzugt von 5 bis 15 %, bezogen auf das Melamin/Formaldehyd (MF)-Vorkondensat, zugegeben.

Bei dem erfindungsgemäßen Verfahren geht man aus von einem Melamin/Formaldehyd-Vorkondensat. Melamin/Formaldehyd-Kondensationsprodukte können neben Melamin bis zu 50, vorzugsweise bis 20, Gew.-% anderer Duroplastbildner und neben Formaldehyd bis zu 50, vorzugsweise bis zu 20, Gew.-% anderer Aldehyde einkondensiert enthalten. Besonders bevorzugt ist ein unmodifiziertes Melamin/Formaldehyd-Kondensationsprodukt. Als Duroplastbildner kommen beispielsweise in Frage: alkyl- und aryl-alkylsubstituiertes Melamin, Harnstoff, Urethane, Carbonsäureamide, Dicyandiamid, Guanidin, Sulfurylamid, Sulfonsäureamide, aliphatische Amine, Glykole, Phenol und dessen Derivate. Als Aldehyde können z.B. Acetaldehyd, Trimethylolacetaldehyd, Acrolein, Benzaldehyd, Furfurol, Glyoxal, Glutaraldehyd, Phthalaldehyd und Terephthalaldehyd eingesetzt werden. Weitere Einzelheiten über Melamin/Formaldehyd-Kondensationsprodukte finden sich in Houben-Weyl, Methoden der organischen Chemie, Band 14/2, 1963, Seiten 319 bis 402.

Das Molverhältnis Melamin zu Formaldehyd ist in der Regel kleiner als 1 : 1,0, es liegt bevorzugt zwischen 1 : 1,2 und 1 : 4,0, insbesondere zwischen 1 : 1,3 und 1 : 1,8. Nach EP-B 37470 enthalten die Melaminharze vorteilhaft Sulfitgruppen einkondensiert, was beispielsweise durch Zusatz von 1 bis 20 Gew.-% Natriumhydrogensulfit bei der Kondensation des Harzes geschehen kann. Es hat sich nun gezeigt, dass ein relativ hoher Sulfitgruppengehalt bei konstantem Melamin zu Formaldehyd-Verhältnis eine höhere Formaldehyd-Emission des Schaumstoffs zur Folge hat. Das eingesetzte Vorkondensat sollte deshalb praktisch keine Sulfitgruppen enthalten, d.h., der Sulfitgruppengehalt sollte unter 1 %, vorzugsweise unter 0,1 % und insbesondere Null betragen.

Zur Emulgierung des Treibmittels und zur Stabilisierung des Schaumes ist der Zusatz eines Emulgators oder eines Emulgatorgemisches erforderlich. Als Emulgator können anionische, kationische und nichtionische Tenside sowie deren Gemische verwendet werden.

Geeignete anionische Tenside sind Diphenylenoxidsulfonate, Alkan- und Alkylbenzolsulfonate, Alkylnaphthalinsulfonate, Olefinsulfonate, Alkylethersulfonate, Fettalkoholsulfate, Ethersulfate, alpha-Sulfofettsäureester, Acylaminoalkansulfonate, Acylisethionate, Alkylethercarboxylate, N-Acylsarcosinate, Alkyl- und Alkyletherphosphate. Als nichtionische Tenside können Alkylphenolpolyglykolether, Fettalkoholpolyglykolether, Fettsäurepolyglykolether, Fettsäurealkanolamide, EO/PO-Blockcopolymere, Aminoxide, Glycerinfettsäureester, Sorbitanester und Alkylpolyglucoside verwendet werden. Als kationische Emulgatoren kommen Alkyltriammoniumsalze, Alkylbenzyldimethylammoniumsalze und Alkylpyridiniumsalze zum Einsatz. Die Emulgatoren werden vorzugsweise in Mengen von 0,2 bis 5 Gew.-%, bezogen auf das Harz, zugesetzt.

Um aus der Melaminharz-Lösung einen Schaum zu erzeugen, muss diese ein Treibmittel enthalten, wobei sich die Menge nach der erwünschten Dichte des Schaumstoffs richtet. Prinzipiell können bei dem erfindungsgemäßen Verfahren sowohl physikalische als auch chemische Treibmittel angewandt werden. Als physikalische Treibmittel bieten sich z.B. an: Kohlenwasserstoffe, halogenierte, insbesondere fluorierte Kohlenwasserstoffe, Alkohole, Äther, Ketone und Ester in flüssiger Form oder Luft und CO₂ als Gase. Als chemische Treibmittel kommen z.B. Isocyanate in Gemisch mit Wasser in Frage, wobei als wirksames Treibmittel CO₂ freigesetzt wird, ferner Carbonate und Bicarbonate im Gemisch mit Säuren, die ebenfalls CO₂ erzeugen, sowie Azoverbindungen, wie Azodicarbonamid. Bei einer bevorzugten Ausführungsform der Erfindung wird der wässrigen Lösung bzw. Dispersion zwischen 1 und 40 Gew.-%, bezogen auf das Harz, eines physikalischen Treibmittels mit einem Siedepunkt zwischen 0 und 80°C zugesetzt; bei Pentan sind es vorzugsweise 5 bis 15 Gew.-%.
Als Härter werden acide Verbindungen eingesetzt, die die Weiterkondensation des Melaminharzes katalysieren. Die Mengen liegen zwischen 0,01 und 20, vorzugsweise zwischen 0,05 und 5 Gew.-%, bezogen auf das Harz. In Frage kommen anorganische und organische Säuren, z.B. Salzsäure, Schwefelsäure, Phosphorsäure, Salpetersäure, Ameisensäure, Essigsäure, Oxalsäure, Toluolsulfonsäuren, Amidosulfonsäuren sowie Säureanhydride.

Die wässrige Lösung bzw. Dispersion ist vorzugsweise frei von weiteren Zusatzstoffen. Für manche Zwecke kann es jedoch günstig sein, bis zu 20 Gew.-%, vorzugsweise weniger als 10 Gew.-%, bezogen auf das Harz, üblicher Zusatzstoffe, wie Farbstoffe, Flammschutzmittel, UV-Stabilisatoren, Mittel zur Herabsetzung der Brandgastoxizität oder zur Förderung der Verkohlung zuzusetzen. Da die Schaumstoffe im allgemeinen offenporig sind und Wasser aufnehmen können, kann es für manche Anwendungszwecke notwendig sein, Hydrophobierungsmittel in Mengen von 0,2 bis 5 Gew.-% zuzusetzen. In Frage kommen dabei z.B. Silikone, Paraffine, Silikon- und Fluortenside, hydrophobe Kohlenwasserstofftenside, Silikon- und Fluorcarbonemulsionen.

Die Konzentration des Melamin/Formaldehyd-Vorkondensates in der Mischung aus Vorkondensat und Lösungsmittel kann in weiten Grenzen zwischen 55 und 85, vorzugsweise zwischen 63 und 80, Gew.-% schwanken. Die bevorzugte Viskosität der Mischung aus Vorkondensat und Lösungsmittel liegt zwischen I und 300° dPas, vorzugsweise zwischen 5 und 2000 dPas.

Die Zusatzstoffe werden mit der wässrigen Lösung oder Dispersion des Melaminharzes homogen vermischt, wobei das Treibmittel ggf. auch unter Druck eingepresst werden kann. Man kann jedoch auch von einem festen, z.B. sprühgetrockneten Melaminharz ausgehen und dieses dann mit einer wässrigen Lösung des Emulgators, dem Härter sowie dem Treibmittel vermischen. Das Vermischen der Komponenten kann z.B. in einem Extruder vorgenommen werden. Nach dem Vermischen wird die Lösung oder Dispersion durch eine Düse ausgetragen und unmittelbar anschließend erhitzt und dabei verschäumt.

Das Erhitzen der treibmittelhaltigen Lösung oder Dispersion kann grundsätzlich -wie in EP-B 17671 beschrieben - durch heiße Gase oder Hochfrequenzbestrahlung vorgenommen werden. Bevorzugt wird aber das erforderliche Erhitzen durch Ultrahochfrequenzbestrahlung nach EP-B 37470 durchgeführt. Bei dieser dielektrischen Strahlung kann grundsätzlich mit Mikrowellen im Frequenzbereich von 0,2 GHz bis 100 GHz gearbeitet werden. Für die industrielle Praxis stehen Frequenzen von 0,915, 2,45 und 5,8 GHz zur Verfügung, wobei 2,45 GHz besonders bevorzugt sind. Strahlungsquelle für dielektrische Strahlung ist das Magnetron, wobei auch mit mehreren Magnetronen gleichzeitig bestrahlt werden kann. Es ist darauf zu achten, dass bei der Bestrahlung die Feldverteilung möglichst homogen ist.

Zweckmäßigerweise wird die Bestrahlung so durchgeführt, dass die Leistungsaufnahme der Lösung oder Dispersion zwischen 5 und 200, vorzugsweise zwischen 9 und 120 KW, bezogen auf 1 kg Wasser in der Lösung bzw. Dispersion liegt. Ist die aufgenommene Leistung geringer, dann findet kein Aufschäumen mehr statt und die Mischung härtet nur noch aus. Arbeitet man innerhalb des bevorzugten Bereichs, so schäumt die Mischung umso schneller, je größer die Leistungsaufnahme ist. Oberhalb von etwa 200 KW pro kg Wasser erhöht sich die Schäumgeschwindigkeit nicht mehr wesentlich.

Die Bestrahlung der zu verschäumenden Mischung erfolgt unmittelbar nachdem sie aus der Schäumdüse ausgetreten ist. Dabei wird die infolge Temperaturerhöhung und Verdampfen des Treibmittels aufschäumende Mischung auf umlaufende Bänder aufgebracht, die einen Rechteck-Kanal zur Formung des Schaums bilden.

Nach seiner Herstellung werden die erfindungsgemäßen Schaumstoffe einer Temperaturbehandlung unterworfen. Sie werden dabei in der Regel 1 bis 180 min, vorzugsweise 5 bis 60 min lang auf Temperaturen zwischen 100 und 300°C, insbesondere zwischen 150 und 250°C erhitzt, wobei Wasser, Treibmittel und Formaldehyd weitgehend entfernt wird.

Die erfindungsgemäß hergestellten elastischen Schaumstoffe, die vorzugsweise praktisch keine Sulfitgruppen enthalten, weisen eine Dichte von 5 bis 50 gl⁻¹ auf.

Die Schaumstoffe können - wie in EP-B 37470 beschrieben - getempert und verpresst werden, um ihre anwendungstechnischen Eigenschaften zu verbessern.

Die Schaumstoffe können als Platten oder Bahnen mit einer Höhe bis zu 2 m hergestellt werden oder als Schaumfolien mit einer Dicke von wenigen mm. Die bevorzugte Schaumhöhe (in Schäumrichtung) liegt bei Verwendung von Mikrowellen der Frequenz 2,45 GHz zwischen 50 cm und 150 cm. Aus derartigen Schaumstoffbahnen können alle erwünschten Platten- bzw. Folienstärken herausgeschnitten werden. Die Schaumstoffe können ein- oder beidseitig mit Deckschichten versehen oder kaschiert werden, z.B. mit Papier, Pappe, Glasvlies, Holz, Gipsplatten, Metallblechen oder -folien, Kunststoff-Folien, die gegebenenfalls auch geschäumt sein können.

Das Hauptanwendungsgebiet der erfindungsgemäß hergestellten Schaumstoffe ist die Wärme- und Schalldämmung von Gebäuden und Gebäudeteilen, insbesondere von Zwischenwänden, aber auch von Dächern, Fassaden, Türen und Fußböden; weiterhin die Wärme- und Schalldämmung der Motor- und Innenräume von Fahrzeugen und Flugzeugen sowie die Tieftemperaturisolierung, z.B. von Kühlhäusern, Öltanks und Behältern von Flüssiggas. Weitere Anwendungsgebiete sind die Verwendung als isolierende Wandverkleidung sowie als isolierendes und stoßdämmendes Verpackungsmaterial. Aufgrund der hohen Härte vernetzter Melaminharze können die Schaumstoffe auch für leicht abrasiv wirkende Reinigungs-, Schleif- und Polierschwämme eingesetzt werden. Die offenzeilige Struktur der Schaumstoffe erlaubt zusätzlich die Aufnahme und Speicherung geeigneter Reinigungs-, Schleif- und Poliermittel im Innem der Schaumstoffe. Auch können die Schwämme für spezielle Reinigungsaufgaben hydrophob und oleophob ausgerüstet werden. Wegen der extrem niedrigen FA-Emissionen im Vergleich zu den bisher auf dem Markt angebotenen M/F-Schaumstoffen, lassen sich die erfindungsgemäßen Schaumstoffe auch im Hygienesektor z.B. in Form von dünnen Vliesen als Wundverband oder als Bestandteil von Babywindeln und Inkontinenzprodukten einsetzen.

Die in den Beispielen genannten Teile und Prozente beziehen sich auf das Gewicht.

### Beispiel 1

70 Teile eines sprühgetrockneten Melamin/Formaldehyd-Vorkondensats (Molverhältnis 1 : 1,6) und 5,25 Teile Harnstoff werden in Wasser gelöst. Dieser Harzlösung werden 3 % Ameisensäure, 2 % eines Fettalkoholpolyglykolethers und 10 % Pentan, jeweils bezogen auf Harz, zugesetzt. Es wird kräftig gerührt und anschließend in einer Schäumform aus Polypropylen durch Einstrahlung von Mikrowellenenergie bei 2,54 GHz verschäumt.

Der Formaldehydfänger zeigt bei der Temperung bei einer Temperatur im Bereich von 100 bis 160 °C die größte Wirkung. Bei dieser Temperatur wird der Schaumstoff noch nicht vollständig ausgehärtet, so dass er thermoformbar bleibt und dennoch eine Formaldehydemission, gemessen nach DIN 55666, von 0,1 ppm oder darunter aufweist. Die Formaldehydemission des erfindungsgemäßen Schaumstoffes liegt somit unter dem in der Chemikalienverbotsverordnung § 1 festgelegten Grenzwert von 0,1 ppm.

### Beispiele

Nach Temperung bei 110°C emittiert der Schaumstoff 0,08 ppm Formaldehyd, bestimmt nach DIN 55666. Der Schaumstoff ist thermoformbar und die FA-Emissionen liegen unter dem Grenzwert der Chemikalienverbotsverordnung.

### Beispiel 2

Beispiel 1 wurde wiederholt mit dem Unterschied, dass die Temperung bei 220°C erfolgte und eine Formaldehydemission nach DIN 55666 zu 0,3 ppm bestimmt wurde. Der Schaumstoff ist nicht thermoformbar.

### Vergleichsversuch

Beispiel 1 wurde wiederholt, wobei kein Harnstoff zugesetzt wurde. Nach Temperung bei 110°C emittiert der Schaumstoff 0,42 ppm Formaldehyd, bestimmt nach DIN 55666. Der Schaumstoff ist thermoformbar, die FA-Emissionen liegen aber über dem Grenzwert der Chemikalienverbotsverordnung.

## Patentansprüche

1. Verfahren zur Herstellung von Schaumstoffen durch Erwärmen unter Aufschäumen und Vernetzen einer Mischung, enthaltend ein Melamin/Formaldehyd (MF)-Vorkondensat, einen Härter und ein Treibmittel, **dadurch gekennzeichnet, dass** vor dem Erwärmen als Formaldehydfänger Harnstoff, substituierte Harnstoffe, alkyl- oder arylsubstituiertes Melamin, Urethane, Carbonsäureamide, Dicyandiamid, Guanidin, Sulfurylamid, Sulfonsäureamide, aliphatische Amine oder Glykole, in Mengen von 2 bis 10 Gew.-%, bezogen auf das Melamin/Formaldehyd (MF)-Vorkondensat, zugegeben werden.

2. Verfahren nach Anspruch 1, **dadurch gekennzeichnet, dass** die Mischung in Form einer wässrigen Lösung oder Dispersion mit 55 bis 85 Gew.-% Melamin/Formaldehyd (MF)-Vorkondensat eingesetzt wird.

3. Verfahren nach einem der Ansprüche 1 oder 2, **dadurch gekennzeichnet, dass** das Molverhältnis Melamin/Formaldehyd des Vorkondensates im Bereich von 1:1,3 bis 1:4 liegt.

4. Verfahren nach einem der Ansprüche 1 bis 3, **dadurch gekennzeichnet, dass** als Härter 0,01 bis 20 Gew.-%, bezogen auf das Melamin/Formaldehyd (MF)-Vorkondensat, eingesetzt werden.

5. Verfahren nach einem der Ansprüche 1 bis 4, **dadurch gekennzeichnet, dass** ein physikalisches Treibmittel mit einem Siedepunkt zwischen 0 und 80°C in Mengen von 1 bis 40 Gew.-%, bezogen auf das Melamin/Formaldehyd (MF)-Vorkondensat, eingesetzt wird.

6. Verfahren nach einem der Ansprüche 1 bis 5, **dadurch gekennzeichnet, dass** der Schaumstoff nach dem Aufschäumen und Vernetzen bei einer Temperatur im Bereich von 100 bis 160°C getempert wird.

## Claims

1. A process for the production of foams by heating with forming and crosslinking of a mixture comprising a melamine/formaldehyde (MF) precondensate, a curing agent and a blowing agent, wherein urea, substituted ureas, alkyl- or acryl-substituted melamine, urethanes, carboxamides, dicyandiamide, guanidine, sulfurylamide, sulfonamides, aliphatic amines or glycols in amounts of from 2 to 10% by weight, based on the melamine/formaldehyde (MF)precondensate, are added as formaldehyde scavenger prior to the heating.

2. The process according to claim 1, wherein tie mixture is used in the form of an aqueous solution or dispersion comprising from 55 to 85% by weight of melamine/formaldehyde (MF) precondensate.

3. The process according to either of claims 1 and 2, wherein the molar melamine/formaldehyde ratio of the precondensate is in the range from 1:1.3 to 1:4.

4. The process according to any of claims 1 to 3, wherein from 0.01 to 20% by weight, based on the melamine/formaldehyde (MF) precondensate, are used as the curing agent.

5. The process according to any of claims 1 to 4, wherein a physical blowing agent having a boiling point of from 0 to 80°C is used in amounts of from 1 to 40% by weight, based on the melamine/formaldehyde (MF) precondensate.

6. The process according to any of claims 1 to 5, wherein, after the foaming and crosslinking, the foam is heated at a temperature in the range from 100 to 160°C.

## Revendications

1. Procédé pour la production de mousses par chauffage avec moussage et réticulation d'un mélangé contenant un produit de précondensation mélamine/ formaldéhyde (MF), un durcisseur et un argent d'expansion, **caractérisé en ce qu'**avant le chauffage on ajouté en tant que capteur de formaldéhyde de l'urée, des urées substituées, une mélamine substitués par alkyle ou aryle, des uréthannes, des carboxamides, du dicyanodiamide, de la guanidine, du sulfurylamide, des sulfonamides, des amines aliphatique ou des glycols, en quantités de 2 à 10 % en poids, par rapport au produit de précondensation mélamine/formaldéhyde (MF).

2. Procédé selon la revendication 1, **caractérisé en ce que** le mélangé est utilisé sous forme d'une dispersion ou solution aqueuse comportant de 55 à 85 % en pois de produit de précondensation mélamine/formaldéhyde (MF).

3. Procédé selon la revendication 1 ou 2, **caractérise en ce que** le rapport molaire mélamine/formaldéhyde du produit de précondensation se situe dans la plage de 1:1,3 à 1:4.

4. Procédé selon l'une quelconque des revendication 1 à 3, **caractérise en ce qu'**on utilisé 0,01 à 20 % en poids de durcisseur, par rapport au produit de précondensation mélamine/formaldéhyde (MF).

5. Procédé selon l'une quelconque des revendications 1 à 4, **caractérisé en ce qu'**on utilise un argent d'expansion physique ayant un point d'ébullition compris entré 0 et 80 °C, en des quantité de 1 à 40 % en poids, par rapport au produit de précondensation mélamine/formaldéhyde (MF).

6. Procédé selon l'une quelconque des revendications 1 à 5, **caractérise en ce qu'**après le moussage et la réticulation on soumet la mousse à un traitement thermique à une température dans la plage de 100 à 160 °C.
